# EUROPEAN PATENT APPLICATION

(11) **EP 4 637 079 A1**
(43) Date of publication of application: **22.10.2025**
(21) Application number: 24170901.3
(22) Date of filing: 17.04.2024
(51) Int. Cl.: H04L 9/40, H04W 12/041

(54) **METHOD FOR ESTABLISHING A SECURE COMMUNICATION BETWEEN AN AIRCRAFT AND A GOUND ENTITY**

(71) Applicant: ARINC Incorporated, Annapolis, MD 21401 (US)
(72) Inventor: Graefe, Jonathan M., 21409-5439 Annapolis, MD (US)
(74) Representative: Schmitt-Nilson Schraud Waibel Wohlfrom Patentanwälte Partnerschaft mbB

(57) **Abstract**

A method for establishing a secure communication (20) between an aircraft (2) and a ground entity (4) includes: sending a communication initialization message (22) from the aircraft (2) to the ground entity (4), wherein the communication initialization message (22) is included in an IP datagram structure (122) and wherein the IP datagram structure (122) comprises an IP address of the aircraft (2); at the ground entity (4), obtaining a public key certificate of the aircraft (2) via the IP address of the aircraft (2); and sending a public key certificate of the ground entity (4) from the ground entity (4) to the aircraft (2) as part of a response message (24) to the communication initialization message (22).

## Description

The present invention is in the field of aircraft communications. In particular, the present invention is in the field of establishing secure communication between aircraft and ground entities.

Aircraft operate in an environment that is heavily constrained in terms of communication resources. In particular, aircraft often times work in limited radiofrequency (RF) bandwidth environments. They often have to share a single frequency between many aircraft. Accordingly, RF transmission time is a very precious resource for aircraft.

It is further highly important for aircraft to establish secure communications with ground entities. Modern aircraft rely on encryption of messages with respective key pairs of public and private keys. The public key of every key pair is commonly associated with a public key certificate, which is an electronic document for proving the validity of a public key. The establishing of secure communication commonly requires an elaborate handshake protocol, leading to a large communication overhead, before the actual exchange of payload data is enabled. Given the limited RF resource, the handshakes may be a large burden on the RF resources. Also, with common handshakes often requiring the completion of the handshake to take place in a limited amount of time and with the RF resource being constrained, handshakes often fail due to time-out constraints.

Accordingly, it would be beneficial to provide a method for establishing a secure communication between an aircraft and a ground entity that has a reduced authentication overhead on the RF resource.

Exemplary embodiments of the invention include a method for establishing a secure communication between an aircraft and a ground entity, the method comprising: sending a communication initialization message from the aircraft to the ground entity, wherein the communication initialization message is included in an IP datagram structure and wherein the IP datagram structure indicates an IP address of the aircraft; at the ground entity, obtaining a public key certificate of the aircraft via the IP address of the aircraft; and sending a public key certificate of the ground entity from the ground entity to the aircraft as part of a response message to the communication initialization message.

Exemplary embodiments of the invention may allow for the mutual authentication of the aircraft and the ground entity with a lower number of messages and with a low usage of the RF resources to / from the aircraft. As compared to previous approaches, the message exchange for the handshake between the aircraft and the ground entity may be kept to a reduced number of messages. In particular, as compared to previous approaches where the aircraft initiated the communication with a first message, where the ground entity responded to the first message with a second message, which included the public key certificate of the ground entity, and where the aircraft sent the public key certificate of the aircraft to the ground entity in a third message, the exchange of public key certificates may be kept to a first message from the aircraft, herein referred to as the communication initialization message, and a second message from the ground entity, herein referred to as the response message to the communication initialization message. Stated explicitly, the method according to exemplary embodiments of the invention may be implemented to not comprise a step of sending the public key certificate of the aircraft from the aircraft to the ground entity.

As described herein, exemplary embodiments of the invention relate to methods for establishing secure communication between aircraft and ground entities. The term secure communication relates to communication that is protected by cryptographic means. In particular, the secure communication may be implemented via the use of a cryptographic key pair for each of the aircraft and the ground entity. Further in particular, each of the aircraft and the ground entity may have a respective pair of a public key and a private key, with the outbound communication being encrypted with the public key of the respectively other entity and with the inbound communication being decrypted with the private key of the receiving entity. Each of the cryptographic key pairs may in particular be an RSA key pair, an ESDSA key pair or any other type of suitable key pair. The public key certificate of the aircraft is associated with the public key of the aircraft, and the public key certificate of the ground entity is associated with the public key of the ground entity. The cryptographic key pairs may be predefined / pre-generated key pairs or may be session key pairs. The term secure communication does not necessarily mean that the communication is 100% secure against attacks. Rather, the term secure communication relates to communication that is protected by the use of encryption keys, with the certificates associated with the encryption keys being subject to some form of authentication in the initial stages of the establishment of the communication between the aircraft and the ground entity.

There may be various reasons for the need to have a secure communication between the aircraft and the ground entity and to perform an authentication in the initial stages of the communication. The need may arise from the contents of the communication. For example, the aircraft and the ground entity may share safety-relevant data regarding the flight of the aircraft and / or the flight path of the aircraft. For such data, there is a very strong interest in maintaining communication integrity between the aircraft and the ground entity. The need may also arise from the fact that there is no or only a low level of prima facie trust between the aircraft and the ground entity, i.e. that there is no or only a low level of trust at the onset of the communication. For example, the aircraft may be from a different country than the location of the ground entity. In another example, the aircraft operator may be different from the operator of the ground entity. With different countries and different operators of aviation equipment belonging to different trust groups and/or to different trust levels, general aviation procedures may require a mutual authentication of the aircraft and the ground entity, in order to establish a trustworthiness of both entities that is considered sufficient, in particular sufficient for exchanging potentially safety-relevant communication between the aircraft and the ground entity.

For security reasons, certificates are often short-lived in the aviation field. For example, the public key certificates, as described herein, may be valid for some days only. Accordingly, the demand for validation of public key certificates is an ongoing demand in the aviation field.

The aircraft has a key pair, comprising a public key and a private key. The public key certificate of the aircraft is associated with the key pair of the aircraft. It can also be said that the public key certificate of the aircraft is associated with the public key of the aircraft. The aircraft may send its public key to the ground entity, or the ground entity may obtain the public key of the aircraft from another source, e.g. together with the public key certificate of the aircraft. The key pair of the aircraft may be a predefined / pre-generated key pair. It is also possible that a session key pair is generated in an algorithmic manner with the help of the certificates of the aircraft and the ground entity. The public key of the session key pair may be sent from the aircraft to the ground entity, after the aircraft has received the public key certificate of the ground entity. The keys of the session key pair may also be referred to as write key and read key.

The ground entity has a key pair, comprising a public key and a private key. The public key certificate of the ground entity is associated with the key pair of the ground entity. It can also be said that the public key certificate of the ground entity is associated with the public key of the ground entity. The ground entity may send its public key together with the public key certificate in the response message. The key pair of the ground entity may be a predefined / pre-generated key pair. It is also possible that a session key pair is generated in an algorithmic manner with the help of the certificates of the aircraft and the ground entity. The public key of the session key pair may be sent from the ground entity to the aircraft, after the ground entity has obtained the public key certificate of the aircraft. The keys of the session key pair may also be referred to as write key and read key.

The public key certificate of the aircraft / ground entity may also be referred to as a digital certificate or as an identity certificate or simply as a certificate of the aircraft / ground entity herein. The public key certificate of the aircraft / ground entity may be a TLS/DTLS certificate, i.e. a certificate that is suitable for being used for authentication according to the TLS/DTLS standard.

The ground entity may be any ground entity that is part of an aviation communication network and that offers ground communication services to aircraft. The ground entity may, for example, be an airport or a communication outpost on an island or in a remote land portion or a ground communication link in a sparsely populated region / in a region with sparse aviation infrastructure.

The method comprises sending a communication initialization message from the aircraft to the ground entity, wherein the communication initialization message is included in an IP datagram structure and wherein the IP datagram structure indicates an IP address of the aircraft. The term communication initialization message indicates that that message is the beginning of an initial exchange of messages between the aircraft and the ground entity. In particular, the communication initialization message may be the first message with which the aircraft starts a communication with the ground entity. The communication initialization message may be the first message of a handshake protocol between the aircraft and the ground entity. The said initial exchange of messages is an exchange of messages that requires an exchange / obtainment of public key certificates and, potentially, public keys for establishing a secure communication. The initial exchange of messages may comprise a mutual authentication and may comprise a validation of the exchanged / obtained public key certificates. The initial exchange of messages is a non-resumption exchange, i.e. it is not part of an exchange of messages between the aircraft and the ground entity that is subsequent to a previously established communication, which may have been paused or which may have been lost due to the aircraft and the ground entity losing the joint radio frequency channel. For example, in case an aircraft flies through the coverage area of a particular ground entity and re-enters that coverage area a short time later, such as later during the same day or the following day, it is possible to resume the previous secure communication via a resumption operation. In this case, it is possible that no exchange of certificates is needed. The communication initialization message is not part of such a resumption of a previous secure communication, but forms part of an establishing of a secure communication where a full handshake, including an exchange / obtainment of certificates, is required. By using the IP address of the aircraft, as provided in the communication initialization message, for obtaining the public key certificate of the aircraft, a front loading of the exchange / obtainment of certificates and a reduction of messages for making the certificates available may be achieved.

The communication initialization message is included in an IP datagram structure, and the IP datagram structure indicates an IP address of the aircraft. The term IP datagram structure refers to a structure comprising one or more IP datagrams, i.e. one or more IP packets. The IP datagram structure may also be referred to as IP packet structure. The IP datagram structure may consist of a single IP packet or may be composed of a plurality of IP packets. The IP address of the aircraft may be given in or deducible from each of the one or more IP packets. As is customary in the art, the abbreviation IP refers to Internet Protocol. Accordingly, the terms IP datagram and IP packet may also be referred to as Internet Protocol datagram and Internet Protocol packet. Given that aircraft are nowadays provided with IP addresses, which is in line with the expanding Internet of Things (IoT) environment around the globe, the IP address of the aircraft is data that is readily available in the aircraft and that can be conveniently included in the IP datagram structure.

The method comprises the step of obtaining the certificate of the aircraft via the IP address of the aircraft. The obtaining of the public key certificate is arranged for by the ground entity. Accordingly, it can also be said that the method comprises obtaining, at the ground entity, the public key certificate of the aircraft via the IP address of the aircraft. The ground entity may obtain the public key certificate of the aircraft from any suitable entity, herein also referred to as certificate database, that has the public key certificate of the aircraft available. In particular, the ground entity may request the public key certificate of the aircraft from an entity for which it has a high level of trust. It is possible that the public key certificate of the aircraft is requested right from the issuer of the certificate or from an OCSP trusted responder or from another entity, such as a third party supplier administrating a database of aircraft certificates. The public key certificate of the aircraft may also be obtained from a local database, maintained at the ground entity. The IP address of the aircraft may be used as an index for querying a certificate database and for obtaining the public key certificate of the aircraft. It is also possible that a relationship between the IP address of the aircraft and another form of unique identification information of the public key certificate of the aircraft, such as certificate issuer information and serial number, may be obtained from a separate database and that the public key certificate of the aircraft is obtained in a second step with said unique identification information. Irrespective of the number of steps, the IP address is used as a form of unique identification of the aircraft and as a means of finding and obtaining the public key certificate of the aircraft. The IP address of the aircraft is used as a means of unambiguous identification of the aircraft and as a means for unambiguously locating the public key certificate of the aircraft. The ground entity may receive the public key of the aircraft from the aircraft or may obtain the public key of the aircraft in a similar manner as laid out above for the public key certificate. The ground entity may obtain the public key certificate of the aircraft and the public key of the aircraft together or separately.

As stated above, the communication initialization message is included in an IP datagram structure. It can also be said that the communication initialization messages is embedded into / encapsulated into an IP datagram structure. The communication initialization message may be seen as the payload of the IP datagram structure. For example, the communication initialization message may be a TLS message or a DTLS message or a message in accordance with another suitable secure communication protocol, and the IP datagram structure around the communication initialization message may facilitate the transmission of the communication initialization message in accordance with the Internet Protocol Suite. Analogous to the communication initialization message, the validation request and/or the validation response and/or the response message may be included in respective IP datagram structures.

The method comprises sending a public key certificate of the ground entity from the ground entity to the aircraft as part of a response message to the communication initialization message. In other words, the method comprises sending a response message to the communication initialization message from the ground entity to the aircraft, wherein the response message comprises the public key certificate of the ground entity. The ground entity may send its public key together with the public key certificate in the response message. The response message may be the first substantive response that the ground entity sends in response to the communication initialization message. In particular, the response message may be the first response that is not a simple receipt acknowledgement or retry command in reaction to the communication initialization message.

The method according to exemplary embodiments of the invention may eliminate the need to send the public key certificate of the aircraft from the aircraft to the ground entity. In other words, the method according to exemplary embodiments of the invention may be implemented without a step of sending the public key certificate of the aircraft from the aircraft to the ground entity. Further, it is possible that no dedicated identification information regarding the public key certificate of the aircraft is sent from the aircraft to the ground entity and that the obtainment of the public key certificate of the aircraft is carried out solely on the basis of the IP address of the aircraft. In this way, the usage of the constrained RF resource may be kept particularly low.

According to a further embodiment, the IP datagram structure is an uncompressed IP datagram structure and the uncompressed IP datagram structure comprises the IP address of the aircraft. In particular, the IP datagram structure may be a standard IPv6 datagram structure that has the IP address of the aircraft in a header section of each IP packet of the IP datagram structure. In this way, the IP address of the aircraft is readily available for the ground entity in each IP packet, as received from the aircraft.

According to a further embodiment, the IP datagram structure is a compressed IP datagram structure in accordance with an IP compression protocol and the compressed IP datagram structure comprises the IP address of the aircraft. In particular, the IP address of the aircraft may be included in a compressed header section of the IP datagram structure. The IP compression protocol may be Robust Header Compression (ROHC). The IP address of the aircraft may be included in a header section of an IP packet, generated with the compressor of the ROHC state machine being in an Initialization and Refresh (IR) state. The ground entity may obtain the IP address of the aircraft by de-compressing such an IP packet. The IP address of the aircraft may be obtained, without having to consult other data structures apart from the given IP packet.

According to a further embodiment, the IP datagram structure is a compressed IP datagram structure in accordance with an IP compression protocol and the compressed IP datagram structure comprises a pointer towards the IP address of the aircraft. In particular, the pointer towards the IP address of the aircraft may be included in a compressed header section of the IP datagram structure. The IP compression protocol may be Robust Header Compression (ROHC). The pointer towards the IP address of the aircraft may be included in a header section of an IP packet, generated with the compressor of the ROHC state machine not being in an Initialization and Refresh (IR) state. For example, the pointer towards the IP address of the aircraft may be included in a header section of an IP packet, generated with the compressor of the ROHC state machine being in a First Order (FO) state or a Second Order (SO) state. The pointer towards the IP address of the aircraft may be a pointer towards a previously sent IP datagram structure that comprises the IP address of the aircraft. Such functionality is provided for by the Roust Header Compression protocol, which does not repeat information that does not change from IP packet to IP packet. Accordingly, a non-changing IP address can be obtained from a previously sent IP datagram structure that comprised the IP address.

The Robust Header Compression (ROHC), as described above, may for example be ROHCv1, also referred to as RFC 3095, or ROHCv2, also referred to as RFC 5225.

According to a further embodiment, the IP datagram structure comprises at least one IP packet, and the IP address of the aircraft is included in a header section of the at least one IP packet. In case the IP datagram structure comprises a plurality of IP packets, the IP address of the aircraft may be included in the header section of each of the plurality of IP packets. In the header section of the at least one IP packet, the IP address of the aircraft may serve the dual purpose of facilitating the routing functionality in accordance with the Internet Protocol and of being easily accessible for the ground entity for the ensuing obtainment of the public key certificate of the aircraft via the IP address of the aircraft. This dual purpose may contribute to a particularly low usage of the constrained RF resource. The IP address of the aircraft may be provided in an uncompressed header section of the at least one IP packet, such as in an uncompressed header section of at least one IP packet in accordance with a standard IPv6 format. The IP address of the aircraft may also be provided in a compressed header section of the at least one IP packet. The compressed header section of the at least one IP packet may be a header section that is compressed in accordance with the Robust Header Compression (ROHC) protocol.

According to a further embodiment, the IP datagram structure comprises one IP packet, and the communication initialization message is included in a payload section of the one IP packet. It can also be said that the IP datagram structure consists of exactly one IP packet. In this case, the communication initialization message fits into the payload section of said one IP packet, i.e. the payload section of said one IP packet is sufficient in size for including the full communication initialization message. In this case, the communication overhead due to the IP packet header may be kept particularly low.

According to a further embodiment, the IP datagram structure comprises a plurality of IP packets, and the communication initialization message is split among payload sections of the plurality of IP packets. In this way, the individual IP packets may be kept to a smaller size and may fit better / more flexibly into the constrained RF channel between the aircraft and the ground entity. A particularly reliable and/or particularly timely transmission of the IP datagram structure may thus be achieved.

According to a further embodiment, the IP address of the aircraft is included in the communication initialization message. In particular, in addition to being given in / deducible from the header section of the at least one IP packet of the IP datagram structure, the IP address of the aircraft may be repeated in the communication initialization message. This may enable the ground entity to check the IP address of the aircraft, as given in / deducible from the header section of the at least one IP packet, against the IP address of the aircraft, as given in the communication initialization message. This may provide for an additional layer of security, as the header section of the at least one IP packet may be tampered with / may be corrupted along the way. While this could be detected in the ensuing steps of the handshake between the aircraft and the ground entity, an early indication regarding a misrepresentation of the IP address of the aircraft may help in a timely restarting of the handshake and a timely establishment of the secure communication.

According to a further embodiment, said obtaining of the public key certificate of the aircraft via the IP address of the aircraft comprises: sending a certificate request message from the ground entity to a certificate database, the certificate request message comprising the IP address of the aircraft; at the certificate database, identifying the public key certificate of the aircraft, using the IP address of the aircraft as an index; and sending a certificate provision message from the certificate database to the ground entity, the certificate provision message comprising the public key certificate of the aircraft. The certificate database may be the certificate issuer of the public key certificate of the aircraft or may be an entity belonging to said certificate issuer. The certificate database may also be another database having the public key certificate of the aircraft available. For example, the certificate database may be an OCSP trusted responder. The ground entity may know or may deduce which certificate database to send the certificate request message to. For example, the ground entity may deduce from the structure or from certain values within the IP address of the aircraft which entity to query for the public key certificate of the aircraft. It is also possible that the ground entity may have or may deduce contextual information, such as information about the operator of the aircraft, and may use said contextual information for querying the appropriate certificate database. In this way, the obtaining of the public key certificate of the aircraft may be achieved with a particularly low number of messages.

Analogous to the communication initialization message, the certificate request message and/or the certificate provision message may be included in respective IP datagram structures. Analogous to the remarks above, the IP datagram structures may be uncompressed IP datagram structures or compressed IP datagram structures. The certificate database may be remote from the ground entity. The certificate database may in particular be reachable via a communication network, such as the internet.

According to a further embodiment, said obtaining of the public key certificate of the aircraft via the IP address of the aircraft comprises: sending a certificate identification request message from the ground entity to a first certificate database, the certificate identification request message comprising the IP address of the aircraft; at the first certificate database, obtaining unique identification information of the public key certificate of the aircraft, such as certificate issuer information and a serial number of the public key certificate of the aircraft, using the IP address of the aircraft as an index; sending a certificate identification message from the first certificate database to the ground entity, the certificate identification message comprising the unique identification information of the public key certificate of the aircraft; on the basis of the unique identification information of the public key certificate of the aircraft, sending a certificate request message from the ground entity to a second certificate database; and sending a certificate provision message from the second certificate database to the ground entity, the certificate provision message comprising the public key certificate of the aircraft. In this way, a two-step process for obtaining the public key certificate of the aircraft may be implemented. In particular, in cases where the ground entity does not know or cannot deduce which certificate database may have the public key certificate of the aircraft available, the ground entity may obtain unique identification information regarding the public key certificate of the aircraft with the help of the IP address of the aircraft in a first step and may obtain the public key certificate with the help of the unique identification information of the aircraft in a second step. The first certificate database may be any suitable database that has a mapping table between IP addresses and identification information of associated public key certificates available and that includes a record for the IP address of the aircraft. The second certificate database may be the certificate issuer of the public key certificate of the aircraft or may be an entity belonging to said certificate issuer. The second certificate database may also be another database having the public key certificate of the aircraft available. For example, the second certificate database may be an OCSP trusted responder. The certificate request message may include the unique identification information of the public key certificate of the aircraft. It is also possible that the certificate request message includes a subset of the unique identification information. Depending on the nature of the second certificate database, e.g. depending on whether or not the second certificate database is the certificate issuer of the public key certificate of the aircraft, a subset of the unique identification information may be sufficient for identifying the public key certificate of the aircraft at the second certificate database.

Analogous to the communication initialization message, the certificate identification request message and/or the certificate identification message may be included in respective IP datagram structures. Analogous to the remarks above, the IP datagram structures may be uncompressed IP datagram structures or compressed IP datagram structures. The first certificate database and/or the second certificate database may be remote from the ground entity. The first certificate database and the second certificate database may be in different locations or in the same location. The first certificate database and/or the second certificate database may in particular be reachable via a communication network, such as the internet.

The unique identification information may comprise any kind of information that allows for an unambiguous identification of the public key certificate of the aircraft. For example, the unique identification information may comprise certificate issuer information and a serial number of the public key certificate of the aircraft. In other words, the unique identification information may comprise an unambiguous indication which authority issued the public key certificate of the aircraft and what the serial number of the public key certificate of the aircraft is.

According to a further embodiment, the secure communication between the aircraft and the ground entity is a TLS/DTLS-based secure communication. In other words, the secure communication between the aircraft and the ground entity may be carried out in accordance with the Transport Layer Security (TLS) protocol. As a specific implementation thereof, the secure communication between the aircraft and the ground entity may be carried out in accordance with the Datagram Transport Layer Security (DTLS) protocol. As used herein, the expression TLS/DTLS means TLS or DTLS. The secure communication may be carried out in accordance with any version of TLS, such as TLS 1.3, or in accordance with any version of DTLS, such as DTLS 1.3.

According to a further embodiment, the communication initialization message is a client hello message. In particular, the communication initialization message may be a client hello message in accordance with the TLS communication protocol or in accordance with the DTLS communication protocol. By definition, the client hello message of the TLS/DTLS communication protocol is the message to start the communication.

According to a further embodiment, the communication initialization message comprises an indication of at least one trusted responder. The method may further comprise: at the ground entity, sending a validation request regarding a public key certificate of the ground entity to a selected one of the at least one trusted responder and receiving a validation response from the selected one of the at least one trusted responder. The response message, sent from the ground entity to the aircraft, may comprise the validation response. In other words, the ground entity may forward the validation response to the aircraft as part of the response message to the communication initialization message.

In this way, as compared to previous approaches where it was the aircraft's task to validate the public key certificate of the ground entity out of its own motion, after receiving the public key certificate of the ground entity from the ground entity, the burden of validating the public key certificate of the ground entity may be offloaded to a validation process on the ground where the involved entities are not as constrained in terms of their communication resources. In previous approaches, the aircraft triggered some form of certificate validation process via another message over the constrained RF resource and received some form of response, also over the constrained RF resource. With the validation via a trusted responder, this requirement may be eliminated and the validation of the public key certificate of the ground entity may be offloaded to a network of ground entities only. In this way, the scarce RF resource may be alleviated from the traffic generated in the context of validating the public key certificate of the ground entity.

With the aircraft indicating at least one trusted responder and with the ground entity using a selected one of the at least one trusted responder, as provided by the aircraft, for validating the public key certificate of the ground entity, the aircraft can gain a sufficient level of trust for the ground entity from the validation response, without having to carry out the validation process itself. In particular, because the validation response stems from an entity that the aircraft trusts, namely from a selected one of the at least one trusted responder, the aircraft can determine from the validation response whether the trustworthiness of the ground entity is high enough to start the secure communication. The aircraft may be brought into a position to take an informed / reasoned decision on whether to trust the ground entity or not, without having to carry out its own validation procedure over the scarce RF resource. Further, with the validation of the public key certificate of the ground entity being offloaded to ground entities, which do not operate in a constrained RF network, the validation regarding the public key certificate of the ground entity may be carried out in a predictable and quick manner. The risk of the handshake between the aircraft and the ground entity timing out, as has often been the case in previous approaches where the RF resource was involved, may be greatly reduced.

As stated above, the communication initialization message may comprise an indication of at least one trusted responder. The indication of the at least one trusted responder may be a responder identification and/or an address where the trusted responder may be reached, e.g. an IP address. The trusted responder is an entity that is configured to navigate the public key infrastructure (PKI) and to determine a trustworthiness of a particular public key certificate and/or a trustworthiness of a path within the public key infrastructure between two certificates. In case the public key infrastructure is seen as a PKI tree, the trusted responder may evaluate the trustworthiness of a certain path between two leafs of said tree and/or the trustworthiness of a certain leaf, also referred to as a certain node of the tree. For this purpose, the trusted responder may walk the PKI tree from the certificate in question up to a recognized certificate authority.

The term trusted responder is commonly used in various protocols where certificates may be checked / validated in online procedures. An example of such a protocol is the Online Certificate Status Protocol (OCSP). The trusted responder is considered trusted, because one of the entities of the end-to-end communication, namely the aircraft, trusts the trusted responder for making a reliable determination regarding the validity / authenticity of the certificate to be validated, namely the public key certificate of the ground entity. As discussed above, different countries and/or different aviation operators may be in different trust groups and/or may not have an upfront trust for each other. Accordingly, an aircraft from a first trust group may want to communicate with a ground entity from a second trust group and may indicate a trusted responder within the first trust group to the ground entity for having the public key certificate of the ground entity validated.

As stated above, the method may comprise sending, from the ground entity to a selected one of the at least one trusted responder, a validation request regarding a public key certificate of the ground entity. The expression of the selected one of the at least one trusted responder indicates that the ground entity can select among the trusted responders, as provided by the aircraft in the communication initialization message. In case the aircraft has provided an indication of only one trusted responder, the ground entity has to select this trusted responder. In case the aircraft has provided an indication of a list of a plurality of trusted responders, the ground entity may select among that plurality of trusted responders.

As stated above, the method may comprise, at the ground entity, receiving a validation response from the selected one of the at least one trusted responder. The validation response is a response to the validation request, as sent from the ground entity to the selected one of the at least one trusted responder. The validation response may contain an indication regarding the trustworthiness of the public key certificate of the ground entity. Accordingly, the validation response may contain an indication regarding the level of trust that the aircraft can have with respect to the ground entity. The indication regarding the trustworthiness of the public key certificate of the ground entity may be a simple trustworthy / not trustworthy indication. It may also contain some sort of score regarding the trustworthiness of the public key certificate of the ground entity. This score may, for example, depend on the level of confidence in the individual legs of the path of the public key infrastructure tree between the ground entity and a trusted certificate authority, as assessed by the trusted responder. In any case, the validation response may contain information that enables the aircraft to make a well-informed / well-reasoned decision whether or not to trust the ground entity.

According to a further embodiment, the indication of the at least one trusted responder is provided in a responder extension of the client hello message. The term responder extension is used as referring to any suitable extension of the client hello message that may contain the indication of the at least one trusted responder. In particular, the client hello message may comprise a certificate status request, such as a certificate status request in accordance with the Online Certificate Status Protocol (OCSP). Said certificate status request may be provided with one or more trusted responder IDs. It can therefore also be said that the at least one trusted responder is provided in a certificate status request with trusted responder IDs extension of the client hello message. The certificate status request may in particular be structured in accordance with the RFC 6066 Section 8 definition of the TLS extension. The indication of the at least one trusted responder may be provided as a responder ID_list in the extension of the client hello message.

According to a further embodiment, the IP address of the aircraft is provided in an IP address extension of the client hello message. In this way, it is possible to provide the IP address of the aircraft, as also given in an uncompressed header section of the at least one IP packet or in a compressed header section of the at least one IP packet, additionally as part of the communication initialization message. Redundancy regarding the communication of the IP address of the aircraft may be achieved. In previous approaches, no extension for communicating the IP address of the aircraft in the client hello message existed. Accordingly, providing a certificate extension and using said certificate extension for communicating the IP address of the aircraft in the client hello message provides for a particularly efficient way of achieving redundancy regarding the important data of the IP address of the aircraft. The term IP address extension is used as referring to any suitable extension of the client hello message that may contain the IP address of the aircraft. In an exemplary embodiment, the "Reserved for Private Use" section of the cashed info extension of the RFC 7924 definition for TLS extensions may be used.

According to a further embodiment, the indication of the at least one trusted responder comprises a list of a plurality of trusted responders. By providing a list of trusted responders, the ground entity is brought into a position to select a suitable one of the trusted responders. In particular, the ground entity may select the trusted responder that promises the shortest turn-around time for providing the validation response. Also, the ground entity may turn to a fall-back trusted responder, in case the originally selected trusted responder is out of service, does not answer, fails to provide the validation response, etc.

According to a further embodiment, the at least one trusted responder is at least one OCSP trusted responder. In other words, the at least one trusted responder may be at least one trusted responder in accordance with the Online Certificate Status Protocol (OCSP).

According to a further embodiment, the validation request is an OCSP validation request and the validation response is an OCSP validation response. In other words, the validation request and the validation response may be a validation request and a validation response in accordance with the Online Certificate Status Protocol (OCSP).

It has been found that the Online Certificate Status Protocol (OCSP) is a highly efficient protocol for establishing the trustworthiness of the ground entity and/or for establishing the trustworthiness of the full public key infrastructure path between the aircraft and the ground entity. A very good compromise between reliability of the trustworthiness evaluation and the timely obtaining of validation responses, which is highly important for the establishing of a communication between the aircraft and the ground entity, where significant delays may be introduced due to the constrained RF resource, may be achieved.

According to a further embodiment, the response message to the communication initialization message is a server hello message. In particular, the response message to the communication initialization message may be a server hello message in accordance with the TLS/DTLS communication protocol. The validation response, as may be forwarded by the ground entity, may be provided in a suitable extension of the server hello message.

According to a further embodiment, the communication initialization message comprises a hash of the public key certificate of the aircraft. The hash of the public key certificate of the aircraft may be used by the ground entity to do a different kind of validation check / an additional validation check of the public key certificate of the aircraft, after the public key certificate has been obtained via the IP address of the aircraft. Accordingly, the hash of the public key certificate may provide for an additional layer of security. The hash may be a hash value or any other suitable kind of hash data structure.

According to a further embodiment, the validation request relates to the public key certificate of the ground entity and the public key certificate of the aircraft and the validation response contains an indication of a trustworthiness of a public key infrastructure (PKI) path between the public key certificate of the aircraft and the public key certificate of the ground entity. In this way, an overall level of trust, taking into account both the aircraft and the ground entity, may be determined via a single validation request from the ground entity. The evaluation / validation of both the public key certificate of the ground entity and the public key certificate of the aircraft may be carried out in a joined operation, helping to meet the timing constraints of the handshake between the aircraft and the ground entity. In addition / as an alternative, the ground entity may validate the public key certificate of the aircraft in a separate operation, such as via a validation request to a separate entity which the ground entity trusts. It is possible that the ground entity can choose between a selected one of the at least one trusted responder, as provided by the aircraft, and an arbitrary other responder, in particular an arbitrary other responder that the ground entity trust, for validating the public key certificate of the aircraft.

According to a further embodiment, the method further comprises exchanging messages between the aircraft and the ground entity, wherein messages from the aircraft to the ground entity are encrypted with a ground entity public key, associated with the public key certificate of the ground entity, and wherein messages from the ground entity to the aircraft are encrypted with an aircraft public key, associated with the public key certificate of the aircraft. In this way, after the establishment of the secure communication / after the handshake, as discussed above, the aircraft and the ground entity may share the substantive part of their communication in a secure manner via the usage of the public keys of the aircraft and the ground entity. The contents of these messages may be related to the flight of the aircraft and may contain any sort of relevant information for this flight, such as details of the flight route, status updates regarding the aircraft and its components, status updates regarding the destination airport and intermediate airports, flight traffic information, etc. The ground entity public key and the aircraft public key may be predefined / pre-generated keys. It is also possible that the ground entity public key and the aircraft public key are session keys, generated in an algorithmic manner with the help of the certificates of the aircraft and the ground entity.

So far, the interaction between the aircraft and the ground entity for establishing a secure communication has been described. It is explicitly disclosed herewith that the behaviour and operation of each of the aircraft and the ground entity alone is also considered an independent aspect of the present invention. Accordingly, the roles of the aircraft and the ground entity will be described in a more separate manner as follows.

Exemplary embodiments of the invention further include a method for facilitating a secure communication between an aircraft and a ground entity at the aircraft, the method comprising: sending a communication initialization message from the aircraft to the ground entity, wherein the communication initialization message is included in an IP datagram structure and wherein the IP datagram structure indicates an IP address of the aircraft; and receiving a response message to the communication initialization message from the ground entity, wherein the response message comprises a public key certificate of the ground entity, wherein said receiving of the response message (24) takes place after or concurrently with the ground entity obtaining a public key certificate of the aircraft (2) via the IP address of the aircraft. The expression of facilitating a secure communication between an aircraft and a ground entity at the aircraft is used for referring to the role of the aircraft in the establishing of the secure communication. The additional features, modifications and effects, as described above in the context of the interaction of the aircraft and the ground entity, apply to the method for facilitating a secure communication between an aircraft and a ground entity at the aircraft in an analogous manner, insofar as they relate to the behavior and operation of the aircraft.

In particular, according to a further embodiment, the communication initialization message comprises an indication of at least one trusted responder and the response message comprises a validation response regarding the public key certificate of the ground entity, issued by a selected one of the at least one trusted responder.

According to a further embodiment, the method of the preceding paragraph further comprises checking whether the response message was issued by any of the at least one trusted responder and evaluating a trustworthiness of the ground entity based on the response message and determining whether to start the secure communication with the ground entity. In this way, the aircraft may be given control over whether or not to enter into the secure communication with the ground entity, based on the information received from the trusted responder(s).

Exemplary embodiments of the invention further include a method for facilitating a secure communication between an aircraft and a ground entity at the ground entity, the method comprising: receiving a communication initialization message from the aircraft, wherein the communication initialization message is included in an IP datagram structure and wherein the IP datagram structure indicates an IP address of the aircraft; obtaining the public key certificate of the aircraft via the IP address of the aircraft; and sending a public key certificate of the ground entity to the aircraft as part of a response message to the communication initialization message. The expression of facilitating a secure communication between an aircraft and a ground entity at the ground entity is used for referring to the role of the ground entity in the establishing of the secure communication. The additional features, modifications and effects, as described above in the context of the interaction of the aircraft and the ground entity, apply to the method for facilitating a secure communication between an aircraft and a ground entity at the ground entity in an analogous manner, insofar as they relate to the behavior and operation of the ground entity.

In particular, according to a further embodiment, the communication initialization message comprises an indication of at least one trusted responder. The method may further include sending a validation request regarding a public key certificate of the ground entity to a selected one of the at least one trusted responder and receiving a validation response from the selected one of the at least one trusted responder. The method may further include forwarding the validation response as part of the response message to the communication initialization message.

Exemplary embodiments of the invention further include a first communication device, also referred to herein as aircraft based communication device, that is configured to carry out a method for facilitating a secure communication between an aircraft and a ground entity at the aircraft, as described herein. The first communication device may have a memory, a processor, and a communication front end for exchanging messages with the ground entity over the air interface. A cryptographic key pair and an associated public key certificate of the aircraft may be stored in the memory, wherein the cryptographic key pair comprises a public key of the aircraft and a private key of the aircraft.

Exemplary embodiments of the invention further include a second communication device, also referred to herein as ground entity based communication device, that is configured to carry out a method for facilitating a secure communication between an aircraft and a ground entity at the ground entity, as described herein. The second communication device may have a memory, a processor, and a communication front end for exchanging messages with the aircraft over the air interface. A cryptographic key pair and an associated public key certificate of the ground entity may be stored in the memory, wherein the cryptographic key pair comprises a public key of the ground entity and a private key of the ground entity.

The processor(s) indicated above may include any processor or processing element known in the art. For the purposes of the present disclosure, the term "processor" or "processing element" may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). In this sense, the processor(s) may include any device configured to execute algorithms and/or instructions (e.g., program instructions stored in memory). In one embodiment, the processor(s) may be embodied as a desktop computer, mainframe computer system, workstation, image computer, parallel processor, networked computer, or any other computer system configured to execute a program instruction, as described throughout the present disclosure.

The memory components indicated above may include any storage medium known in the art suitable for storing program instructions executable by the associated processor(s). For example, the memory may include a non-transitory memory medium. By way of another example, the memory may include, but is not limited to, a read-only memory (ROM), a random-access memory (RAM), a magnetic or optical memory device (e.g., disk), a magnetic tape, a solid-state drive and the like. It is further noted that memory may be housed in a common controller housing with the associated processor. In one embodiment, the memory may be located remotely with respect to the physical location of the associated processor.

Exemplary embodiments of the invention further include a system for establishing a secure communication between an aircraft and a ground entity. Said system may comprise a first communication device, as discussed above, and a second communication device, as discussed above. It is also possible that the system comprises an aircraft having said first communication device and a ground entity having said second communication device. The additional features, modifications and effects, as described above with respect to the method for establishing a secure communication between an aircraft and a ground entity, apply to the system for establishing a secure communication between an aircraft and a ground entity in an analogous manner.

Further exemplary embodiments of the invention are described below with expect to the accompanying drawings, wherein:
Figure 1 shows an exemplary aviation framework, in which a method for establishing a secure communication between an aircraft and a ground entity in accordance with exemplary embodiments of the invention can be carried out;
Figure 2 illustrates a method for establishing a secure communication between an aircraft and a ground entity in accordance with an exemplary embodiment of the invention;
Figure 3 illustrates a method for establishing a secure communication between an aircraft and a ground entity in accordance with another exemplary embodiment of the invention; the illustration of the method is split between Figure 3A and Figure 3B, which are jointly referred to as Figure 3.

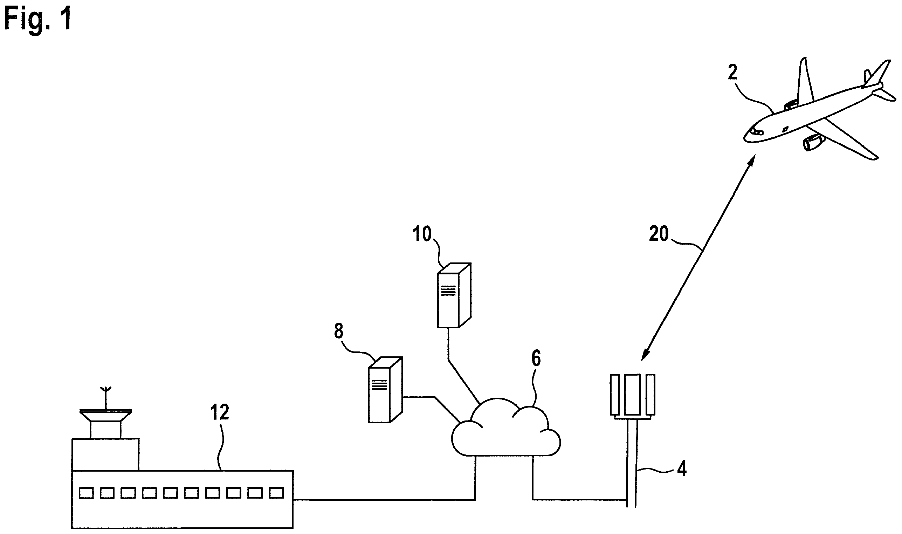

Figure 1 schematically illustrates a framework, in which a method for establishing a secure communication 20 between an aircraft 2 and a ground entity 4 in accordance with exemplary embodiments of the invention may be carried out.

In the scenario of Figure 1, the aircraft 2 is a large commercial passenger air plane that is in flight and that is on its way to a destination airport 12. For the sake of illustration, it is assumed that the aircraft 2 is in the middle of a transatlantic fight, starting in Europe and travelling to the destination airport 12 in North America. Further, it is assumed that the aircraft 2 is over the Atlantic and is approaching the North American continent, with the ground entity 4 being a communication outpost in the Eastern parts of Canada. Accordingly, Figure 1 depicts a scenario where the aircraft 2 has travelled across the ocean for an extended period of time, is just getting into the reach of the ground entity 4, and would like to start a secure communication with the ground entity 4.

The ground entity 4 is connected to a communication network 6, such as the internet. With its connection to the communication network 6, the ground entity 4 may communicate with a wide range of entities worldwide. Accordingly, the aircraft 2 may use the ground entity 4 as a gateway to the communication network 6 and may also communicate with a wide range of entities via the secure communication 20 to the ground entity 4. The aircraft 2 and the ground entity 4 may have one or more antennas each, to carry out RF transmission between them.

The destination airport 12 is also connected to the communication network 6, and the aircraft 2 may communicate with the destination airport 12 via the secure communication 20. The aircraft 2 may also communicate with other airports along the way, with air traffic control entities, with other safety-related entities regarding air travel, etc. For all of these communications, the aircraft 2 may use the data link to the ground entity 4 as a gateway to the communication network 6.

While the ground entity 4, with which the aircraft 2 communicates, is described as a communication outpost in the exemplary scenario of Figure 1, it is understood that the ground entity 4, which is involved in the method according to exemplary embodiments of the invention, may also be an airport, an air traffic control center, or any other suitable kind of ground entity for establishing aviation communication.

The framework of Figure 1 further depicts an OCSP trusted responder 8 and a certificate database 10. Each of the OCSP trusted responder 8 and the certificate database 10 are connected to the communication network 6. Their roles in establishing the secure communication 20 between the aircraft 2 and the ground entity 4 will be described below in the context of the method steps being carried out.

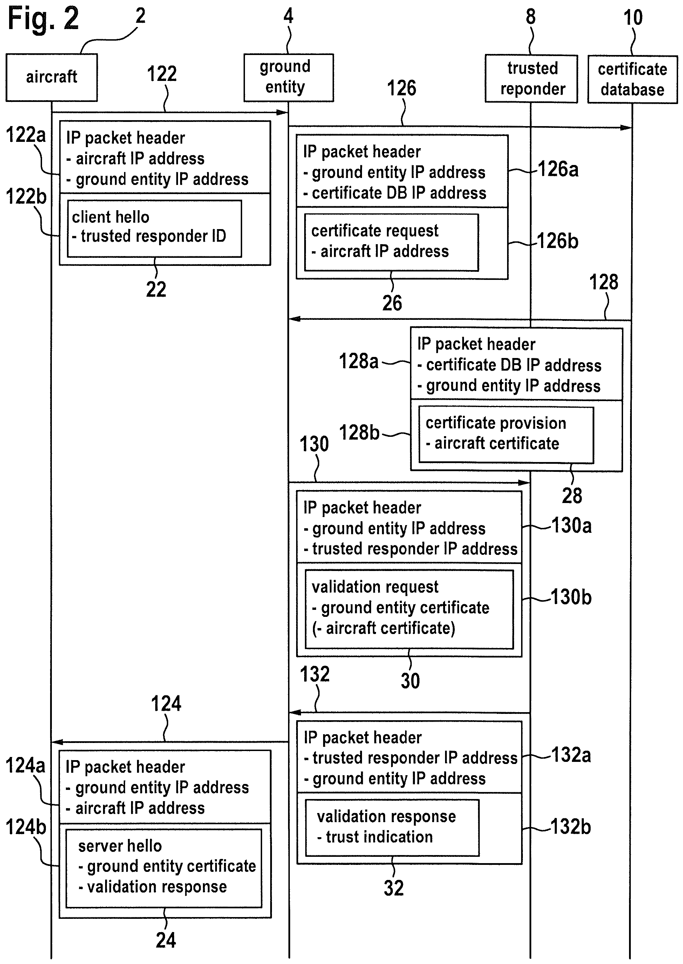

Figure 2 illustrates a method for establishing a secure communication between an aircraft 2 and a ground entity 4 in accordance with an exemplary embodiment of the invention. In particular, Figure 2 illustrates a sequence of messages that are exchanged between an aircraft 2, a ground entity 4, an OCSP trusted responder 8, and a certificate database 10 for establishing the secure communication between the aircraft 2 and the ground entity 4. The aircraft 2, the ground entity 4, the OCSP trusted responder 8, and the certificate database 10 may be the corresponding entities of the framework depicted in Figure 1. This is assumed for the following discussion. However, it is also possible that the aircraft 2, the ground entity 4, the OCSP trusted responder 8, and the certificate database 10 are set up and arranged differently, as compared to the scenario depicted in Figure 1.

In order to start the secure communication between the aircraft 2 and the ground entity 4, the aircraft 2 sends a client hello message 22 to the ground entity 4. The client hello message 22 is the initial message in the exchange of messages between the aircraft 2 and the ground entity 4 and starts a handshake between the aircraft 2 and the ground entity 4. Herein, the client hello message 22 is also referred to as the communication initialisation message 22.

The client hello message 22 is included in / embedded in an IP datagram structure 122. For ease of illustration, the IP datagram structure 122 is depicted as a single IP packet, having a header section 122a and a payload section 122b. The client hello message 22 is included in the payload section 122b of the IP packet. While it is possible that the client hello message 22 fits into the payload section 122b of a single IP packet, it is understood that the client hello message may be split up among a plurality of IP packets. Said plurality of IP packets may jointly form the IP datagram structure 122. Each of said plurality of IP packets may have its own header section and its own payload section. The IP datagram structure 122 may also be referred to as first IP datagram structure 122.

The header section 122a comprises the IP address of the aircraft 2 as the source address of the IP packet and the IP address of the ground entity 4 as the destination address of the IP packet. In this way, the IP packet is structured in accordance with the Internet Protocol suite, and the source address and the destination address provide for the routing functionality of the IP packet. In particular, the destination address signals to the ground entity 4 that the ground entity 4 is the intended recipient of the IP packet.

The client hello message 22 comprises an indication of at least one trusted responder. The indication of the at least one trusted responder is provided in an extension of the client hello message 22. The client hello message 22 may indicate a single trusted responder or may indicate a list of a plurality of trusted responders. The indication of a trusted responder may in particular may be a trusted responder ID. In the exemplary embodiment of Figure 2, the trusted responder ID, contained in the client hello message 22, is the ID of the OCSP trusted responder 8.

The client hello message 22 may further comprise the IP address of the aircraft 2. In particular, the IP address of the aircraft 2 may be provided in another extension of the client hello message 22. In this way, the IP address of the aircraft 2 may be provided in a redundant manner, namely in the header section 122a of the IP packet and in the said extension of the IP packet.

When receiving the client hello message 22, the ground entity 4 sends a certificate request message 26 to the certificate database 10. In this certificate request message 26, the ground entity 4 provides the IP address of the aircraft 2. The IP address of the aircraft 2 is unique identification information of the aircraft 2 and may be viewed as unique identification information regarding the public key certificate of the aircraft 2. The IP address of the aircraft 2 may serve as an index to access the desired record in the certificate database 10, namely the public key certificate of the aircraft 2.

In various implementations, the ground entity 4 may have access to a plurality of certificate databases, and not all of the certificate databases may have the public key certificates of all aircraft available that may wish to establish a secure communication with the ground entity 4. The ground entity 4 may still be in a position to direct the certificate request message 26 to a suitable certificate database, i.e. to a certificate database that has the public key certificate of the aircraft 2 available. It is possible that certain certificate databases contain the public key certificates of entities with IP addresses in a certain block / certain range of IP addresses. Hence, the IP address of the aircraft 2 itself may contain information regarding which aircraft database to query. It is also possible that the ground entity 4 has contextual information, such as information about the operator of the aircraft 2, and may use said contextual information for querying the appropriate certificate database. For example, the public key certificates of certain aircraft operators may be available from certain aircraft databases. It is also possible that the ground entity 4 sends a certificate request message to the OCSP trusted responder 8 for obtaining the public key certificate of the aircraft. In this case, the OCSP trusted responder 8 may act as the OCSP trusted responder 8, as described below, and as the certificate database. It is also possible that the ground entity 4 has a local certificate database of aircraft certificates and queries said local certificate database with the IP address of the aircraft as an index.

As described above with respect to the client hello message, the certificate request message 26 may be included in / embedded in an IP datagram structure. The IP datagram structure that comprises the certificate request message 26 is indicated with reference numeral 126 in Figure 2 and is also referred to as second IP datagram structure 126. Again, the IP datagram structure 126 may comprise a single IP packet or a plurality of IP packets, and the certificate request message 26 may be contained in the one IP packet or may be split up among the plurality of IP packets. The depicted IP packet has a header section 126a, comprising the IP address of the ground entity 4 as the source address and the IP address of the certificate database 10 as the destination address. The certificate request message 26 is included in a payload section 126b of the IP datagram structure 126.

In the exemplary embodiment of Figure 2, the certificate database 10 comprises the public key certificate of the aircraft 2. Further, the certificate database 10 is able to locate said public key certificate of the aircraft 2 with the IP address of the aircraft 2 as an index. The certificate database 10 may be the certificate issuer of the public key certificate of the aircraft 2 or may be another entity that has the public key certificate of the aircraft 2 available.

In response to receiving the certificate request message 26, the certificate database 10 locates the public key certificate of the aircraft 2 via the IP address of the aircraft 2. The certificate database 10 sends a certificate provision message 28 to the ground entity 4. The certificate provision message 28 comprises the public key certificate of the aircraft 2. The ground entity 4 may obtain the public key of the aircraft 2 in a similar manner, either together with the public key certificate or in a separate operation. It is also possible that the ground entity 4 receives the public key of the aircraft 2 from the aircraft 2.

As described above with respect to the client hello message, the certificate provision message 28 may be included in / embedded in an IP datagram structure. The IP datagram structure that comprises the certificate provision message 28 is indicated with reference numeral 128 in Figure 2 and is also referred to as third IP datagram structure 128. Again, the IP datagram structure 128 may comprise a single IP packet or a plurality of IP packets, and the certificate provision message 28 may be contained in the one IP packet or may be split up among the plurality of IP packets. The depicted IP packet has a header section 128a, comprising the IP address of the certificate database 10 as the source address and the IP address of the ground entity 4 as the destination address. The certificate provision message 28 is included in a payload section 128b of the IP datagram structure 128.

Further, the ground entity 4 sends a validation request message 30 to the OCSP trusted responder 8. The validation request message 30 comprises a public key certificate of the ground entity 4 and, as an optional element, the public key certificate of the aircraft 2. Depending on whether the validation request message 30 comprises the public key certificate of the ground entity 4 only or both the public key certificate of the ground entity 4 and the public key certificate of the aircraft 2, the OCSP trusted responder 8 may act and respond somewhat differently.

As described above with respect to the client hello message, the validation request message 30 may be included in / embedded in an IP datagram structure. The IP datagram structure that comprises the validation request message 30 is indicated with reference numeral 130 in Figure 2 and is also referred to as fourth IP datagram structure 130. Again, the IP datagram structure 130 may comprise a single IP packet or a plurality of IP packets, and the validation request message 30 may be contained in the one IP packet or may be split up among the plurality of IP packets. The depicted IP packet has a header section 130a, comprising the IP address of the ground entity 4 as the source address and the IP address of the trusted responder 8 as the destination address. The validation request message 30 is included in a payload section 130b of the IP datagram structure 130.

When receiving the public key certificate of the ground entity 4 without the public key certificate of the aircraft 2, the OCSP trusted responder 8 may evaluate a trustworthiness of the public key certificate of the ground entity 4 only. In particular, the OCSP trusted responder 8 may evaluate a trustworthiness of the public key certificate of the ground entity 4 in accordance with the Online Certificate Status Protocol (OCSP). For evaluating the trustworthiness of the public key certificate of the ground entity 4, the OCSP trusted responder 8 may check that the public key certificate of the ground entity 4 has not expired and has not been revoked. In addition, the OCSP trusted responder 8 may check which certificate issuer issued the public key certificate of the ground entity 4 and evaluate a trustworthiness of the public key certificate of this certificate issuer. The public key certificate of this certificate issuer may, in turn, be issued by another entity, whose trustworthiness may also be evaluated, and so on. In this way, the OCSP trusted responder 8 may walk the public key infrastructure (PKI) from the public key certificate of the ground entity 4 to a root node, such as a particular trusted certificate authority.

From the gathered information, the OCSP trusted responder 8 may determine a trust indication regarding the public key certificate of the ground entity 4. When viewing the public key infrastructure (PKI) as a tree of certificate dependencies, the public key certificate of the ground entity 4 may be seen as a leaf of that tree, and the trust indication may be seen as an indication regarding the trustworthiness of that particular leaf. The trust indication may be a binary indication, simply stating whether the public key certificate of the ground entity 4 is trustworthy or not according to the OCSP trusted responder 8. It is also possible that the trust indication is some sort of trust score that the OCSP trusted responder 8 attributes to the public key certificate of the ground entity 4.

The OCSP trusted responder 8 sends a validation response message 32 to the ground entity 4. The validation response message 32 comprises the trust indication, as determined by the OCSP trusted responder 8. The trust indication may be encrypted or may be provided with other security features, such that the ground entity 4 cannot tamper with the trust indication in a non-apparent matter.

As described above with respect to the client hello message, the validation response message 32 may be included in / embedded in an IP datagram structure. The IP datagram structure that comprises the validation response message 32 is indicated with reference numeral 132 in Figure 2 and is also referred to as fifth IP datagram structure 132. Again, the IP datagram structure 132 may comprise a single IP packet or a plurality of IP packets, and the validation response message 32 may be contained in the one IP packet or may be split up among the plurality of IP packets. The depicted IP packet has a header section 132a, comprising the IP address of the trusted responder 8 as the source address and the IP address of the ground entity 4 as the destination address. The validation response message 32 is included in a payload section 132b of the IP datagram structure 132.

After receiving the validation response message 32 from the OCSP trusted responder 8, the ground entity 4 sends a server hello message 24 to the aircraft 2. The server hello message 24 comprises the public key certificate of the ground entity 4 and forwards the validation response message 32, as received from the OCSP trusted responder 8. The server hello message 24 may further comprise the public key of the ground entity, which is associated with the public key certificate. The public key certificate of the ground entity 4 and the validation response may be provided in respective extensions of the server hello message 24. As the server hello message 24 is a response to the client hello message 22, it is herein also referred to as a response message 24 to the client hello message 22, i.e. as a response message 24 to the communication initialization message 22.

As described above with respect to the client hello message, the server hello message 24 may be included in / embedded in an IP datagram structure. The IP datagram structure that comprises the server hello message 24 is indicated with reference numeral 124 in Figure 2 and is also referred to as sixth IP datagram structure 124. Again, the IP datagram structure 124 may comprise a single IP packet or a plurality of IP packets, and the server hello message 24 may be contained in the one IP packet or may be split up among the plurality of IP packets. The depicted IP packet has a header section 124a, comprising the IP address of the ground entity 4 as the source address and the IP address of the aircraft 2 as the destination address. The server hello message 24 is included in a payload section 124b of the IP datagram structure 124.

The first IP datagram structure 122, the second IP datagram structure 126, the third IP datagram structure 128, the fourth IP datagram structure 130, the fifth IP datagram structure 132, and the sixth IP datagram structure 124 may be uncompressed IP datagram structures, as illustrated in Figure 2. It is also possible that any one or any subset or all of the first IP datagram structure 122, the second IP datagram structure 126, the third IP datagram structure 128, the fourth IP datagram structure 130, the fifth IP datagram structure 132, and the sixth IP datagram structure 124 are compressed IP datagram structures, in particular compressed IP datagram structures in accordance with the Robust Header Compression (ROHC) protocol.

After receiving the server hello message 24, the aircraft 2 may encrypt further messages with the public key of the ground entity 4, associated with the public key certificate of the ground entity 4, and may, in this way, start the secure communication with the ground entity 4. The public key of the aircraft may be a predefined / pre-generated key or a session key generated in an algorithmic manner with the help of the certificates of the aircraft and the ground entity. Before starting the secure communication, the aircraft 2 may assess the validation response from the OCSP trusted responder 8 and may make an informed decision whether the aircraft 2 considers the public key certificate of the ground entity 4 sufficiently trustworthy, in order to enter into a secure communication with the ground entity 4.

As can be seen from above discussion, after the handshake consisting of the client hello message 22 and the server hello message 24, both the aircraft 2 and the ground entity 4 may have all the tools to carry out an encrypted communication between them. Also, after these two messages only, the aircraft 2 is in a position to take an informed / reasoned decision whether or not to trust the ground entity 4.

The exchange of certificates and the provision of information for evaluating the trustworthiness of the ground entity 4 can be carried out with a very low number of messages between the aircraft 2 and the ground entity 4. The scarce RF resource between the aircraft 2 and the ground entity 4 may be used to a minimal extent, because the obtaining of the public key certificate of the aircraft 2 and the evaluation of the trustworthiness of the ground entity 4 is offloaded to ground entities only.

As indicated above, it is possible that the validation request message 30 comprises both the public key certificate of the ground entity 4 and the public key certificate of the aircraft 2. In this case, the OCSP trusted responder 8 may not only gather information regarding the trustworthiness of the public key certificate of the ground entity 4, but may gather information regarding the trustworthiness of both the public key certificate of the ground entity 4 and the public key certificate of the aircraft 2. In terms of the public key infrastructure (PKI) tree, the OCSP trusted responder 8 is able to walk the full path between the public key certificate of the ground entity 4 and the public key certificate of the aircraft 2. In this way, the OCSP trusted responder 8 may give an indication regarding the level of trust for the full leaf-to-leaf path between the public key certificate of the ground entity 4 and the public key certificate of the aircraft 2.

In case the ground entity 4 also trusts the OCSP responder 8, the joint provision of the public key certificate of the ground entity 4 and the public key certificate of the aircraft 2 in the validation request message 30 may lead to an according joint response in the validation response message 32, which may be considered sufficient for the ground entity 4 to trust the public key certificate of the aircraft 2. In that case, the ground entity 4 does not need to carry out further validation procedures. It is also possible that the ground entity 4 has an upfront trust of the public key certificate of the aircraft 2 and does not require any sort of validation. It is further possible that the ground entity 4 performs another kind of validation and requests another entity to validate the public key certificate of the aircraft 2 in a separate procedure. Such a separate procedure may be carried out in parallel with the sending of the validation request message 30. While this separate procedure is not explicitly depicted in Figure 2, it is understood to be an option for the ground entity 4.

In case the ground entity 4 only includes the public key certificate of the ground entity 4 and does not include the public key certificate of the aircraft 2 in the validation request message 30, the ground entity 4 does not have to wait for the certificate provision message 28, in order to send the validation request message 30. Rather, the ground entity 4 may carry out the obtaining of the public key certificate of the aircraft 2 and the sending of the validation request message 30 independently from each other and, potentially, in parallel.

With the above described method of Figure 2 not requiring the transmission of the public key certificate of the aircraft 2 from the aircraft 2 to the ground entity 4 and with the validation of the public key certificate of the ground entity 4 being offloaded to ground entities, the usage of the scarce RF resource between the aircraft 2 and the ground entity 4 may be kept particularly low.

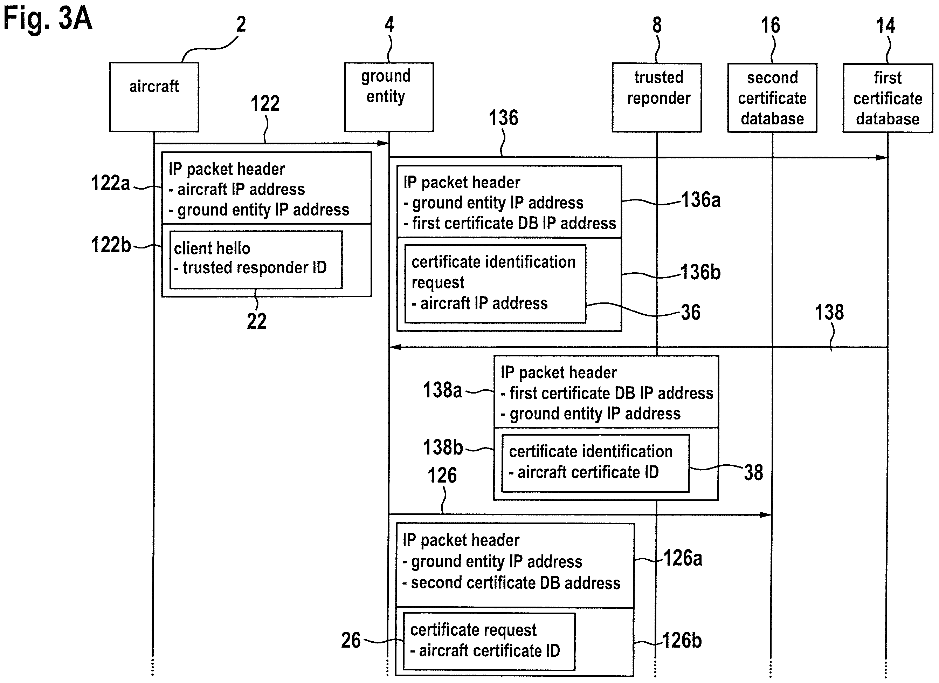

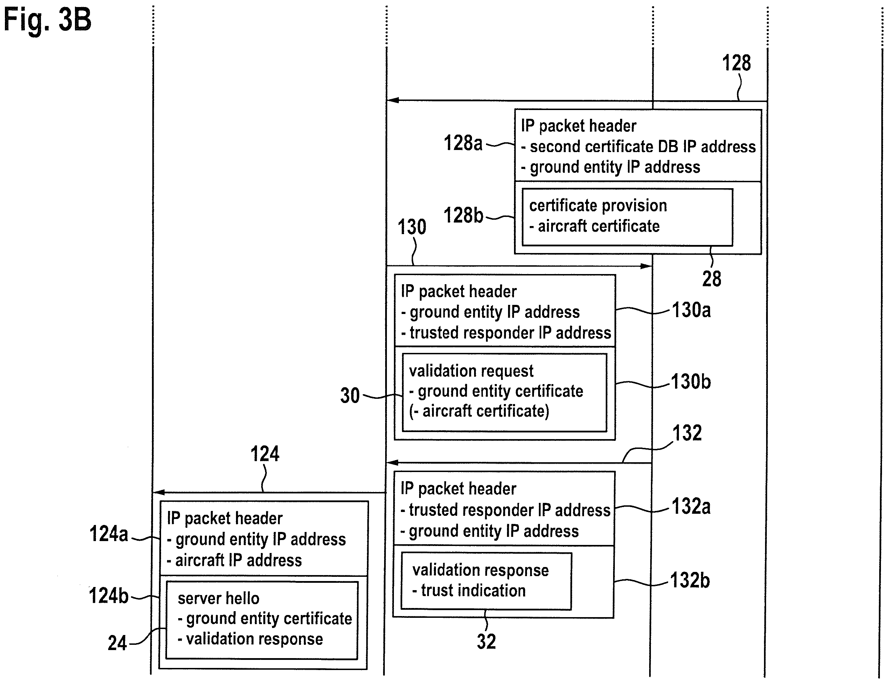

Figure 3 illustrates a method for establishing a secure communication between an aircraft 2 and a ground entity 4 according to another exemplary embodiment of the invention. For ease of illustration, a first portion of the method is depicted in Figure 3A and a second portion of the method is depicted in Figure 3B. It is understood that Figures 3A and 3B are to be read / viewed in conjunction. Figures 3A and 3B are jointly referred to as Figure 3 herein.

The method of Figure 3 is very similar to the method of Figure 2, and according entities and messages are denoted with the same reference numerals. They are not described again, and reference is made to their description in the context of Figure 2 above. The following description focuses on the differences between the method of Figure 3 and the method of Figure 2.

In the method of Figure 3, the ground entity 4 is not in a position to deduce from the IP address of the aircraft 2 which certificate database to query for the public key certificate of the aircraft 2. In order to solve this situation, the ground entity 4 sends a certificate identification request message 36 to a first certificate database 14. The first certificate database 14 may be any entity that has a mapping table between IP addresses of aircraft and unique identification information of the public key certificates of the aircraft. For example, for the IP address of the aircraft 2, the first certificate database 14 may have a record that is accessible via the IP address of the aircraft 2 as an index and that has unique identification information regarding the public key certificate of the aircraft 2 available. Said unique identification information may for example comprise the information regarding the certificate issuer of the public key certificate of the aircraft 2 and a serial number of the public key certificate of the aircraft 2.

As described above with respect to the client hello message, the certificate identification request message 36 may be included in / embedded in an IP datagram structure. The IP datagram structure that comprises the certificate identification request message 36 is indicated with reference numeral 136 in Figure 2 and is also referred to as seventh IP datagram structure 136. Again, the IP datagram structure 136 may comprise a single IP packet or a plurality of IP packets, and the certificate identification request message 36 may be contained in the one IP packet or may be split up among the plurality of IP packets. The depicted IP packet has a header section 136a, comprising the IP address of the ground entity 4 as the source address and the IP address of the first certificate database 14 as the destination address. The certificate identification request message 36 is included in a payload section 136b of the IP datagram structure 136.

The first certificate database 14 sends a certificate identification message 38 to the ground entity 4. The certificate identification message 38 contains the unique identification information regarding the public key certificate of the aircraft 2, indicated as aircraft certificate ID in Figure 3. The aircraft certificate ID may be any form of information that allows for an unambiguous identification of the public key certificate of the aircraft 2. For example, the certificate identification message 38 may comprise the certificate issuer of the public key certificate of the aircraft 2 and a serial number of the public key certificate of the aircraft 2.

As described above with respect to the client hello message, the certificate identification message 38 may be included in / embedded in an IP datagram structure. The IP datagram structure that comprises the certificate identification message 38 is indicated with reference numeral 138 in Figure 2 and is also referred to as eighth IP datagram structure 138. Again, the IP datagram structure 138 may comprise a single IP packet or a plurality of IP packets, and the certificate identification message 38 may be contained in the one IP packet or may be split up among the plurality of IP packets. The depicted IP packet has a header section 138a, comprising the IP address of the first certificate database 14 as the source address and the IP address of the ground entity 4 as the destination address. The certificate identification message 38 is included in a payload section 138b of the IP datagram structure 138.

The seventh IP datagram structure 136 and the eighth IP datagram structure 138 may be uncompressed IP datagram structures, as illustrated in Figure 3. It is also possible that any one or both of the seventh IP datagram structure 136 and the eighth IP datagram structure 138 are compressed IP datagram structures, in particular compressed IP datagram structures in accordance with the Robust Header Compression (ROHC) protocol.

Upon receiving the certificate identification message 38, the ground entity 4 may obtain the public key certificate of the aircraft 2 from a second certificate database 16. The communication with the second certificate database 16 may take place in the same manner as with the certificate database 10, as described with respect to Figure 2, with the exception that the certificate request message 26 does not contain the IP address of the aircraft 2, but another kind of unique identification information regarding the public key certificate of the aircraft 2, referred to as aircraft certificate ID in Figure 3. In the exemplary embodiment of Figure 3, the ground entity 4 can deduce from the unique identification information regarding the public key certificate of the aircraft 2, as obtained from the first certificate database 14, which certificate database to query for obtaining the public key certificate of the aircraft 2. In the exemplary embodiment of Figure 3, the second certificate database 16 has the public key certificate of the aircraft 2 available. The second certificate database 16 may the certificate issuer of the public key certificate of the aircraft 2 or may be another entity that has the public key certificate of the aircraft 2 available.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the following claims.

## Claims

1. Method for establishing a secure communication (20) between an aircraft (2) and a ground entity (4), the method comprising:
sending a communication initialization message (22) from the aircraft (2) to the ground entity (4), wherein the communication initialization message (22) is included in an IP datagram structure (122) and wherein the IP datagram structure (122) indicates an IP address of the aircraft (2);
at the ground entity (4), obtaining a public key certificate of the aircraft (2) via the IP address of the aircraft (2); and
sending a public key certificate of the ground entity (4) from the ground entity (4) to the aircraft (2) as part of a response message (24) to the communication initialization message (22).

2. Method according to claim 1,
wherein the IP datagram structure (122) is an uncompressed IP datagram structure and wherein the uncompressed IP datagram structure comprises the IP address of the aircraft (2);
or
wherein the IP datagram structure is a compressed IP datagram structure in accordance with an IP compression protocol, such as Robust Header Compression, and wherein the compressed IP datagram structure comprises the IP address of the aircraft (2);
or
wherein the IP datagram structure is a compressed IP datagram structure in accordance with an IP compression protocol, such as Robust Header Compression, and wherein the compressed IP datagram structure comprises a pointer towards the IP address of the aircraft, such as a pointer towards a previously sent IP datagram structure that comprises the IP address of the aircraft (2).

3. Method according to claim 1 or 2, wherein the IP datagram structure (122) comprises at least one IP packet and wherein the IP address of the aircraft (2) is included in a header section (122a) of the at least one IP packet, wherein the IP address of the aircraft (2) is in particular included in an uncompressed header section (122a) of the at least one IP packet or in a compressed header section of the at least one IP packet.

4. Method according to any of the preceding claims,
wherein the IP datagram structure (122) comprises one IP packet and wherein the communication initialization message (22) is included in a payload section (122b) of the one IP packet; or
wherein the IP datagram structure (122) comprises a plurality of IP packets and wherein the communication initialization message (22) is split among payload sections of the plurality of IP packets.

5. Method according to any of the preceding claims, wherein the IP address of the aircraft (2) is included in the communication initialization message (22).

6. Method according to any of the preceding claims, wherein said obtaining of the public key certificate of the aircraft (2) via the IP address of the aircraft (2) comprises:
sending a certificate request message (26) from the ground entity (4) to a certificate database (10), the certificate request message (26) comprising the IP address of the aircraft (2);
at the certificate database (10), identifying the public key certificate of the aircraft (2), using the IP address of the aircraft (2) as an index; and
sending a certificate provision message (28) from the certificate database (10) to the ground entity (4), the certificate provision message (28) comprising the public key certificate of the aircraft (2).

7. Method according to any of claims 1 to 5, wherein said obtaining of the public key certificate of the aircraft (2) via the IP address of the aircraft (2) comprises:
sending a certificate identification request message (36) from the ground entity (4) to a first certificate database (14), the certificate identification request message (36) comprising the IP address of the aircraft (2);
at the first certificate database (14), obtaining unique identification information of the public key certificate of the aircraft (2), such as certificate issuer information and a serial number of the public key certificate of the aircraft (2), using the IP address of the aircraft (2) as an index;
sending a certificate identification message (38) from the first certificate database (14) to the ground entity (4), the certificate identification message (38) comprising the unique identification information of the public key certificate of the aircraft (2);
on the basis of the unique identification information of the public key certificate of the aircraft (2), sending a certificate request message (26) from the ground entity (4) to a second certificate database (16); and
sending a certificate provision message (28) from the second certificate database (16) to the ground entity (4), the certificate provision message (28) comprising the public key certificate of the aircraft (2).

8. Method according to any of the preceding claims, wherein the secure communication (20) between the aircraft (2) and the ground entity (4) is a TLS/DTLS-based secure communication.

9. Method according to any of the preceding claims,
wherein the communication initialization message (22) is a client hello message;
and/or
wherein the response message (24) to the communication initialization message (22) is a server hello message.

10. Method according to any of the preceding claims,
wherein the communication initialization message (22) comprises an indication of at least one trusted responder (8), in particular an indication of at least one OCSP trusted responder;
wherein the method further comprises: at the ground entity (4), sending a validation request (30) regarding a public key certificate of the ground entity (4) to a selected one of the at least one trusted responder (8) and receiving a validation response (32) from the selected one of the at least one trusted responder (8); and
wherein the response message comprises the validation response (32).

11. Method according to claim 10,
wherein the communication initialization message (22) is a client hello message; and
wherein the indication of the at least one trusted responder (8) is provided in a responder extension of the client hello message and/or wherein the IP address of the aircraft (2) is provided in an IP address extension of the client hello message.

12. Method according to claim 10 or 11,
wherein the validation request (30) relates to the public key certificate of the ground entity (4) and the public key certificate of the aircraft (2), and
wherein the validation response (32) contains an indication of a trustworthiness of a public key infrastructure (PKI) path between the public key certificate of the aircraft (2) and the public key certificate of the ground entity (4).

13. Method according to any of the preceding claims, further comprising:
exchanging messages between the aircraft (2) and the ground entity (4),
wherein messages from the aircraft (2) to the ground entity (4) are encrypted with a ground entity public key, associated with the public key certificate of the ground entity (4), and
wherein messages from the ground entity (4) to the aircraft (2) are encrypted with an aircraft public key, associated with the public key certificate of the aircraft (2).

14. Method for facilitating a secure communication (20) between an aircraft (2) and a ground entity (4) at the aircraft (2), the method comprising:
sending a communication initialization message (22) from the aircraft (2) to the ground entity (4), wherein the communication initialization message (22) is included in an IP datagram structure (122) and wherein the IP datagram structure (122) indicates an IP address of the aircraft (2); and
receiving a response message (24) to the communication initialization message (22) from the ground entity (4), wherein the response message (24) comprises a public key certificate of the ground entity (4), wherein said receiving of the response message (24) takes place after or concurrently with the ground entity obtaining a public key certificate of the aircraft (2) via the IP address of the aircraft (2).

15. Method for facilitating a secure communication (20) between an aircraft (2) and a ground entity (4) at the ground entity (4), the method comprising:
receiving a communication initialization message (22) from the aircraft (2), wherein the communication initialization message (22) is included in an IP datagram structure (122) and wherein the IP datagram structure (122) indicates an IP address of the aircraft (2);
obtaining a public key certificate of the aircraft (2) via the IP address of the aircraft (2); and
sending a public key certificate of the ground entity (4) to the aircraft (2) as part of a response message (24) to the communication initialization message (22).
